# EUROPEAN PATENT SPECIFICATION

(11) **EP 2 035 755 B1**
(45) Date of publication and mention of the grant of the patent: **01.01.2014**
(21) Application number: 07747507.7
(22) Date of filing: 14.06.2007
(51) Int. Cl.: F24H 1/18, F24D 3/08

(54) **LIQUID CONTAINER FOR HEATING TAP WATER**
FLÜSSIGKEITSBEHÄLTER ZUM ERHITZEN VON LEITUNGSWASSER
RÉCIPIENT POUR LIQUIDE PERMETTANT DE CHAUFFER DE L'EAU DU ROBINET

(30) Priority: 16.06.2006 NL 2000107
(43) Date of publication of application: 18.03.2009
(73) Proprietor: Solesta B.V., 2993 HE Barendrecht (NL)
(72) Inventor: VAN BERKEL, Jacob, 3911 CA Rhenen (NL); NOIJ, Jeroen Gerardus Hendricus Jacobus, 2993 HE Barendrecht (NL)
(74) Representative: Brouwer, Hendrik Rogier
(86) International application number: PCT/NL2007/050284
(87) International publication number: WO 2007/145521

(56) References cited:
- EP-A- 0 323 942
- DE-A1- 3 518 935
- DE-U1- 20 002 611
- DE-U1- 20 113 767

## Description

The present invention relates to a liquid container for heating tap water and a device for heating tap water, which device comprises the liquid container and an energy source, preferably a thermal solar collector.

Producing solar energy in environmentally-friendly manner takes place, among other ways, using thermal solar collectors through which a liquid for heating is carried. Such solar collectors are for instance placed on roofs of houses in order to thus directly or indirectly heat water of a central heating system, tap water and the like. The solar collector herein usually forms part of an optionally closed circulation system which also incorporates the liquid container. The liquid container then functions as storage medium for the process liquid heated by the solar collector. A heat exchanger accommodated in the liquid container provides for heat transfer from the heated process liquid to the tap water for heating, which is carried through the conduits of the heat exchanger. The use of the thermal solar collectors as described is relatively simple, while a considerable efficiency can nevertheless be achieved. It hereby also becomes economically advantageous to use thermal solar collectors of the described type.

The prior art solar energy systems provided with the known liquid container do however have the drawback that they are relatively expensive for the average consumer, both to purchase and to use. Fitting of the known solar collectors and liquid containers is moreover relatively time-consuming. The known liquid container generally comprises for instance a metal container body provided with heat transfer means, for instance a heat exchanger and throughfeed channels for connecting to the external conduits. The heat transfer means provide for heat transfer from the process liquid to the tap water for heating. In order to maintain the temperature of the process liquid stored in the liquid container as long as possible, the liquid container is wrapped with thermal insulating material. The known liquid container is however difficult to handle due to its weight. Although a plastic liquid container would be lighter, plastic is generally not sufficiently rigid to be able to properly withstand the forces exerted by the water pressure on the walls of the container. This is certainly the case in the longer term because plastic deforms (creeps) over time when under load. This has the consequence that solar energy systems have still not been able to fulfil their true potential, particularly not in the consumer market.

US 5,555,997 describes a storage tank for water. The described storage tank has a rigid outer peripheral body of metal, in which a flexible container body without form-stability is arranged, as well as a pressure compensating cushion. The pressure cushion regulates the pressure variations occurring in the flexible container body due to temperature changes.

EP 0 727 624 A1 describes a liquid container for hot water. The liquid container comprises a first and a second container body. The intermediate space is filled with thermally insulating material from recycled material, for instance waste paper. In all conditions the first container body lies wholly against the second container body via the filled intermediate space.

DE 44 18 108 A1 likewise describes a liquid container for hot water with a first and a second container body. The intermediate space is filled with a double-walled insulating material, whereby an optimal temperature distribution is achieved and the outer side is prevented from becoming too hot.

EP 0 323 942 A discloses a liquid container according to the preamble of claim 1 comprising a container body of metal. The container body is enclosed by a number of insulating layers that are held by an envelope. The insulating layers completely fill the gap between the first container body and the envelope.

DE 35 18 935 A1 discloses a liquid container comprising a container body, which is at the external side thereof covered with blocks of plastic foam for insulating. The foam blocks are positioned close to the container to ensure good insulation.

DE 200 02 611 U1 discloses a liquid container comprising a container body coated with aluminium foil. A number of foam plates are bend around the (cylindrical) container body. The foam plates are provided with grooves to be able to easily bend them. The liquid container is provided with spacers to keep a space clear between the first container body and the faom plates at all times.

The present invention has for its purpose to provide a liquid container and device of the type stated in the preamble, with which the stated drawbacks can be obviated in simple manner while maintaining the advantages of the prior art. The invention provides for this purpose a liquid container which comprises at least a first container body for containing a liquid and further comprises connecting means for external conduits in which the liquid can be circulated, as well as heat transfer means for exchanging heat with the liquid present in the liquid container, wherein the liquid container comprises at least a second container body which is manufactured from a thermally insulating foam material and which encloses the first container body while leaving an intermediate space clear between the first and second container bodies, wherein the first container body can be deformed during use such that at least a part of the first container body comes to lie against the second container body. In the liquid container according to the invention the heated liquid only comes into contact with the first container body. The liquid present in the first container body exerts a pressure on the walls thereof during use. The first container body will hereby deform, wherein the higher the temperature of the liquid, the greater the deformation. This deformation is taken up according to the invention by providing a second container body which encloses the first container body. The first and second container bodies co-act structurally such that the usual loads can be readily absorbed. If desired, the container bodies can be at least locally reinforced. Reinforcement of a container body can for instance take place by arranging a steel band and/or tube round the relevant container body. It is also possible to incorporate rigid plates and/or strips in the foam material, particularly for reinforcing the second container body.

It is characteristic of the inventive liquid container that, in the unfilled state of the first container body, it has at all times an open intermediate space between first and second container bodies. The space between the first and the second container bodies (the "cavity") is chosen to have a width such that during operation at least a part of the first container body comes to lie against at least a part of the second container body. Although not limited hereto, typical cavity widths (with unfilled first container body and at room temperature) are generally chosen between 0.1 mm and 100 mm, more preferably between 0.5 and 30 mm, and most preferably between 1 and 15 mm, wherein the cavity width can, if desired, vary over the surface of the container bodies. For container bodies with cylindrical peripheral surface it is thus possible for instance to choose a first cavity width for the intermediate space between the two peripheral surfaces and a second cavity width for the intermediate space between the two upper sides of the containers.

Because the second container body is manufactured according to the invention from a thermally insulating foam material, the liquid container according to the invention is automatically thermally insulated. It is therefore no longer necessary to arrange additional insulating material, which considerably shortens the fitting time. The cavity between first and second container bodies further enhances this insulation. A further advantage of the liquid container according to the invention is that it can be used at a higher application temperature than is generally the case with plastic containers. This is because the thermally insulating second container body will have a lower average temperature than the first container body, which is in direct contact with the heated liquid, whereby this second container body can absorb more load Because the liquid container can be used at higher temperatures, it has a higher energy storage density, defined as the amount of energy stored per m³. A unique property of the liquid container is that it is self-regulating. As the temperature of the heated liquid increases, the deformation of the first container body will become greater, whereby more load is transferred to the second container body, which has a lower average temperature due to the presence of the intermediate space between the two containers and the thermal insulation, and can therefore better absorb the load. When placed in the outside environment it is also possible that the temperature of the second container body becomes very high on hot days, and possibly even higher than the temperature of the first container body. In that case a part of the load will however shift to the first container body, whereby the liquid container in its entirety is better able to absorb the loads.

In a further preferred embodiment of the liquid container the second container body is manufactured from an expanded polyolefin, and more preferably an expanded polypropylene. Such materials are per se known, although not in this application, and combine a good thermal insulation with a good mechanical loadability. Although the foam material can be chosen within wide limits, it is advantageous if the foam material has a density - in unloaded state - of at least 20 g/dm³, more preferably at least 35 g/dm³, and most preferably at least 50 g/dm³. By increasing the density the second container body not only acts as an excellent thermal insulation for the liquid stored in the first container body, but a substantial part of the load can also be absorbed during use. According to the invention the first container body (or a previous container body) deforms during use such that a substantial part of the load is transmitted to the second (or further) container body. Within the scope of the present application, a substantial part of the load is understood to mean that at least 20% of the load is preferably transmitted from a previous container body to a subsequent container body. In a particular preferred embodiment of the liquid container the properties of the first container body are chosen such that at least 50% of the load is transmitted to the second container body during use. This is even more preferably at least 75% of the load. The distribution of the load over the first and second container bodies can be adjusted in simple manner by the skilled person - in otherwise known manner - by making a suitable choice of the mechanical properties of the container body material, such as for instance the elasticity modulus, and of design parameters, such as for instance the wall thickness of the container bodies.

In a further preferred variant the liquid container according to the invention is characterized in that the creep load as according to ISO 7850 of the foam material from which at least the second container body is manufactured amounts to at least 20 kPa for 5% deformation during 100 days. This is more preferably at least 50 kPa, most preferably at least 80 kPa for 5% deformation during 100 days.

It is in principle sufficient for good operation if the liquid container comprises a first and a second container body. By providing a plurality of nested container bodies a better load distribution and thermal insulation is achieved without this having to adversely affect the weight of the liquid container.

According to the invention the liquid container comprises at least a first container which is enclosed by a second container body from a thermally insulating material which also provides structural support. A structurally simple liquid container has for this purpose a practically closed first container body and a second container body in the form of two mutually pivoting shell elements. The liquid container according to the invention is obtained by closing the two shell elements. It will be apparent that there are other possibilities for manufacturing the second container body.

A further advantage of the liquid container according to the invention is that both the first and the second container body can function as mounting facility for components which can be incorporated in the liquid container, such as for instance a circulation pump, a heat exchanger, controls and sensors for the temperature and pump, conduits and the like. A preferred embodiment of the liquid container therefore has the feature that the first container body comprises fixing, means on the liquid side thereof for arranging components in the liquid container, if desired between opposite wall parts, wherein the first container body can be deformed such that the components can be fixed by at least temporarily deforming the first container body. Because the first container body can be deformed relatively easily according to the invention, at least some of the components, and in particular the heat exchanger, can be suspended without making openings in the first container body. In the context of this application, without making openings is understood to mean that no openings have to be made in the wall of the container body for the purpose of mounting the components. Possible leakage of the liquid container is hereby avoided and a structurally stronger container is obtained. The extra support required after the suspension of the components without making openings is provided by the thermal insulating layer in combination with the second container body.

The liquid container is in principle suitable for any volume. In a typical and also particularly suitable application the liquid container has a volume of a maximum of 160 litres, and in particular a maximum of 110 litres. Such a volume is adapted to domestic use and facilitates placing of the liquid container as component of a device for heating tap water, which for instance also comprises a thermal solar collector as energy source. In such a device the liquid container is preferably positioned not too far from the solar collector. The liquid container according to the invention has the additional advantage that it is relatively compact and that the shape thereof can easily be modified to the circumstances. The shape of the second container body can however be freely chosen. A particularly suitable liquid container has the feature that at least a part of the container bodies is not rotation-symmetrical. By providing for instance the second container body with a flat wall part, the liquid container can be placed with this part on a surface. Owing to the compact dimensions of the liquid container it can for instance be placed behind the knee wall of a roof via a hatch of standard dimensions. The liquid container is also easy to place in relatively small spaces, such as for instance in a kitchen cabinet. The liquid container can herein be placed with the flat wall part on a flat surface and connected and filled in simple manner without disassembly being necessary. In order to further increase the convenience of use the liquid container can, if desired, be provided with reading meters for the water level and the water temperature, wherein the reading meters are preferably incorporated in a wall part.

Although it is not necessary for the invention, it is highly advantageous if at least a part of the container bodies is manufactured from a plastic, preferably by means of rotation moulding. A particularly suitable plastic comprises a polyolefinic plastic, such as for instance polypropylene, because it can be readily rotation moulded and has the desired properties. In the per se known rotation moulding, plastic grains are arranged in a rotating and, if desired, heated mould and then flung in melted state against the wall of the mould, where they solidify and thus form a solid wall. It has been found that the liquid container which comprises at least one rotation-moulded first container body further accentuates the advantages of the inventive container.

The invention also relates to a device for heating tap water, which comprises at least one thermal solar collector and at least one liquid container according to the invention, and which further comprises a supply conduit placed between the liquid container and the thermal solar collector, a discharge conduit placed between the thermal solar collector and the liquid container and a pump for causing forced circulation of the liquid in the device, and wherein the pump is switched off and on to respectively stop the liquid supply and activate the liquid supply. The liquid supply can thus be regulated by operating the pump. The pump can be controlled manually, but in practice the pump will be automatically controlled. Use can for instance be made here of sensors which record temperature values at one or more locations in the solar energy system, on the basis of which the automatic operation of the pump is controlled. It is thus possible for instance to have the pump start when the sun begins to shine, whereby the temperature increases at the position of the solar collector. When solar heat decreases, this temperature will fall and the pump is switched off again. A preferred embodiment of the liquid container according to the invention is provided with a pump for causing forced circulation of the liquid in the heat transfer means. The container according to the invention can advantageously be provided with (connections for) flexible plastic conduits for the process liquid.

A further preferred variant of the liquid container comprises a pump with a maximum flow rate of 30 litres per hour. Such a pump is used in circulation systems of the so-called "low-flow" type, wherein only a low flow rate, in the order of magnitude of 20 litres per hour per m² of collector, is carried through the solar collector. It will be apparent that the liquid container according to the invention is particularly suitable for such low-flow systems.

It is possible in principle to use any suitable energy source in the device according to the invention. It is thus for instance possible to apply the inventive liquid container as an electric boiler, wherein it is thus connected to the mains electricity. A solar collector is however preferably used as energy source. Such collectors are per se known, for instance from the Netherlands patent NL1021229. A particularly suitable energy source comprises an assembly of at least two solar collector modules, each of which comprise a vacuum-formed rear tray manufactured from a suitable plastic, and which are also provided with insulation, with an absorbing unit and a cover plate for the channel plates which is manufactured from transparent plastic. A particularly suitable transparent plastic is polycarbonate.

The heat transfer means of the liquid container preferably comprise a heat exchanger. The heat exchanger is preferably constructed from at least two main conduits for feed and discharge of the transport medium for the heat to be produced, between which is situated a large number of spiral channels of preferably small diameter. Such a heat exchanger is also referred to as a thin tube parallel heat exchanger. The greatest possible surface area for heat exchange is hereby obtained with the smallest possible volume. When water is used as transport medium, the risk of Legionella bacteria forming is thus reduced.

The liquid container is in principle suitable for use in any system wherein heat must be stored. It is thus possible for instance to use the liquid container according to the invention as an electric boiler. In such a preferred embodiment the heat transfer means comprise a heating coil which can heat the liquid present in the first container body by means of electric current. Other suitable applications include a heat pump, a micro-heating and power plant and the like.

There are additional advantages if the liquid container is also provided with regulating means for switching the pump on and off in order to respectively activate and stop the liquid supply. For this purpose the liquid container is more preferably provided with a temperature sensor placed in the lower half of the liquid container for sensing the temperature of the tap water present in the liquid container, wherein the sensor is connected to regulating means for regulating the pump.

Although the device operates extremely well when it comprises only a single liquid container according to the invention, it is advantageous when it comprises at least two liquid containers according to the invention which are mutually connected in series and/or in parallel, wherein the throughfeed outlet channels of a previous liquid container are connected by means of a number of conduits to the throughfeed inlet channels of the subsequent liquid container. The liquid container according to the invention has the additional advantage that it can be coupled in simple manner to a second liquid container according to the invention.

The present invention will be further elucidated on the basis of the exemplary embodiment shown in the following figures of a solar energy system and liquid container according to the invention. Herein:
figure 1 shows a schematic cross-section through a solar energy system, and
figure 2 shows a schematic representation of the liquid container according to the invention in exploded view, and
figure 3 shows a schematic cross-section of the liquid container of figure 2 along the plane A-A,
figure 4 shows a schematic cross-section of the liquid container of figure 2 along the plane B-B, and
figure 5 shows an exploded schematic representation of a solar collector according to the invention.

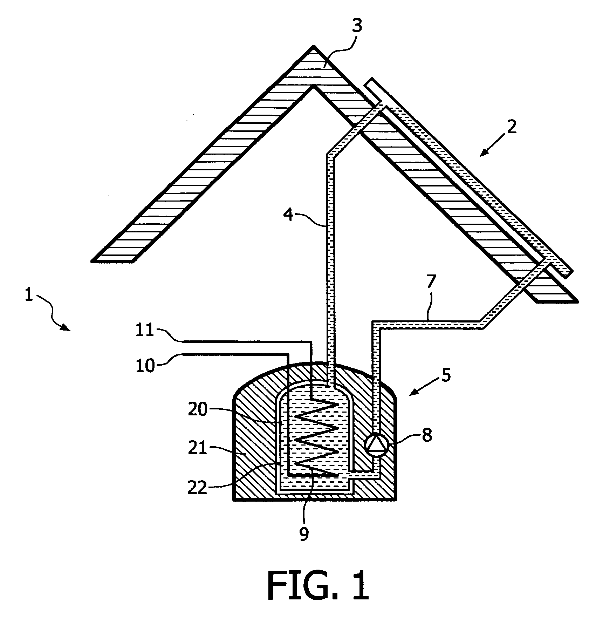

Figure1 shows a solar energy system 1 with a thermal solar collector 2 which is mounted on a roof 3. Through irradiation of sunlight on thermal solar collector 2 the liquid present therein will be heated and guided through a discharge conduit 4 to a liquid container 5 according to the invention. Liquid container 5 comprises a first container body 20 and a second container body 21. Situated between the two container bodies 20, 21 is an intermediate space which can for instance be filled with air. The relatively hot liquid is supplied on the top side of liquid container 5, while using a pump 8 relatively cold liquid is fed to the underside of thermal solar collector 2 from the underside of liquid container 5 by means of a supply conduit 7. When tap water is drawn off (for instance by opening a tap), cold tap water flows through supply conduit 10 to heat exchanger 9, wherein this tap water is heated by heat exchange with the liquid present in liquid container 5, for instance process water, and is then fed through discharge conduit 11 to the tap in heated state, optionally via an afterheating boiler.

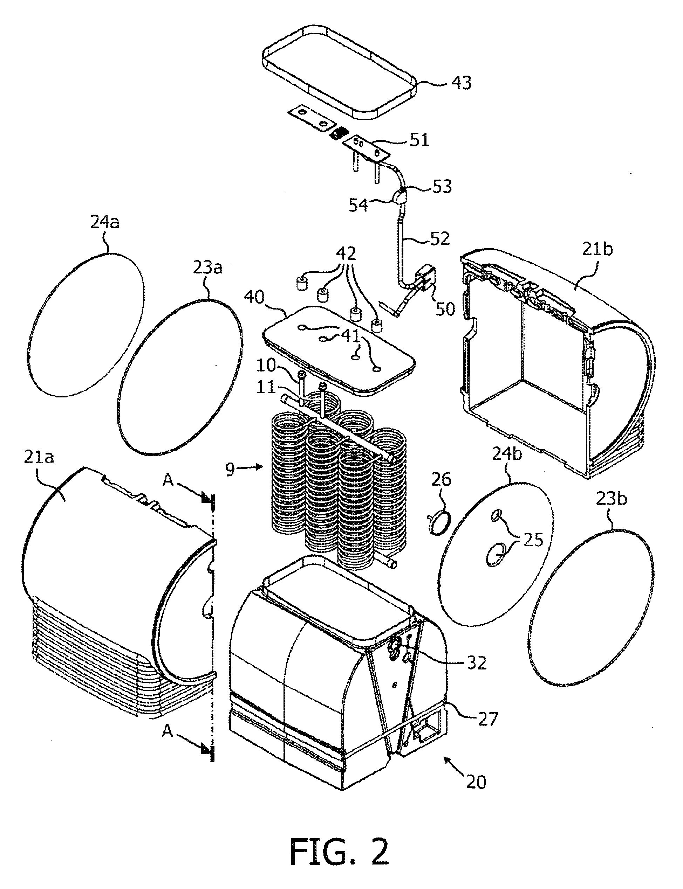

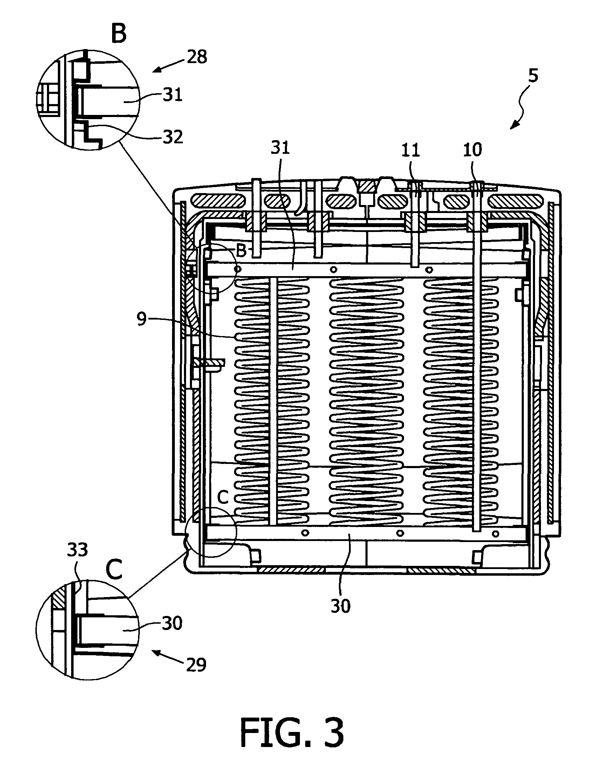

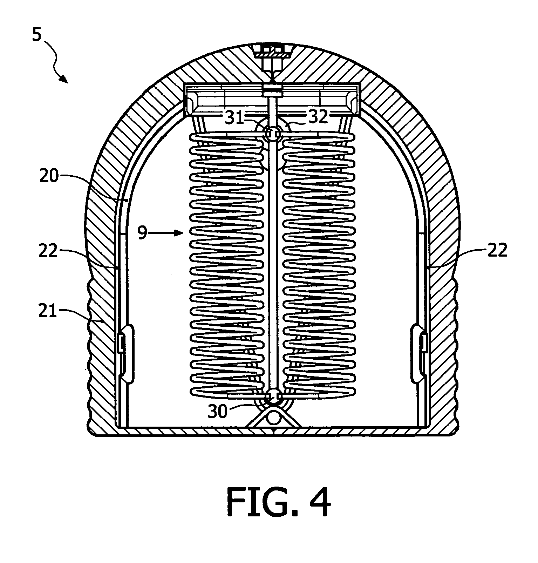

A liquid container 5 according to the invention is shown with reference to figures 2, 3 and 4, which liquid container 5 is provided with a first container body 20 and a second container body 21. In the shown embodiment the second container body 21 comprises two parts (21a, 21b) which are held together by means of tensioning rings (23a, 23b) so that this second container body 21 is loadable. Situated between first container body 20 and second container body 21 is a space 22 which is not filled. Intermediate space 22 absorbs the thermal expansion of first container body 20, wherein during heating hereof at least parts of the first container body come to lie against second container body 21. In the shown exemplary embodiment the second container body 21 is manufactured from expanded polypropylene foam. If desired, the side walls of second container body 21 can be provided with cover plates (24a, 24b), which also provide mechanical support. In the shown exemplary embodiment cover plate 24b is provided with openings 25, for instance for arranging herein a temperature reading 26. For the purpose of further strengthening, first container body 20 is provided if desired with a tensioning band 27 of a suitable metal or plastic, which tensioning band 27 is applied in combination with support profiles on the side walls of first container body 20. First container body 20 is provided on the liquid side thereof with fixing means (28, 29) (see details B and C in figure 3) for accommodation, without making openings, of a heat exchanger 9 between opposite wall parts in liquid container 5, the heat exchanger being provided with an inlet 10 and an outlet 11, for instance for (pre-)heating tap water. As shown in figure 3, the suspension of heat exchanger 9 without making openings is achieved by snapping thereof with the outer ends of its conduits (30, 31) fixedly into wall parts (32, 33). Use is made here of the elastic deformability of the front wall and rear wall of first container body 20. First container body 20 is further provided with a cover 40 in which recesses 41 are present for passage of, among other components, conduits (10, 11). If desired, openings 41 are provided with further insulation 42. In the shown embodiment variant a pump 50 is fixed to cover 40 by means of connecting piece 51 for conduit 52. Conduit 52 incorporates a flow rate indicator 54. Cover 40 is fixed to first liquid container 20 by means of tensioning body 43.

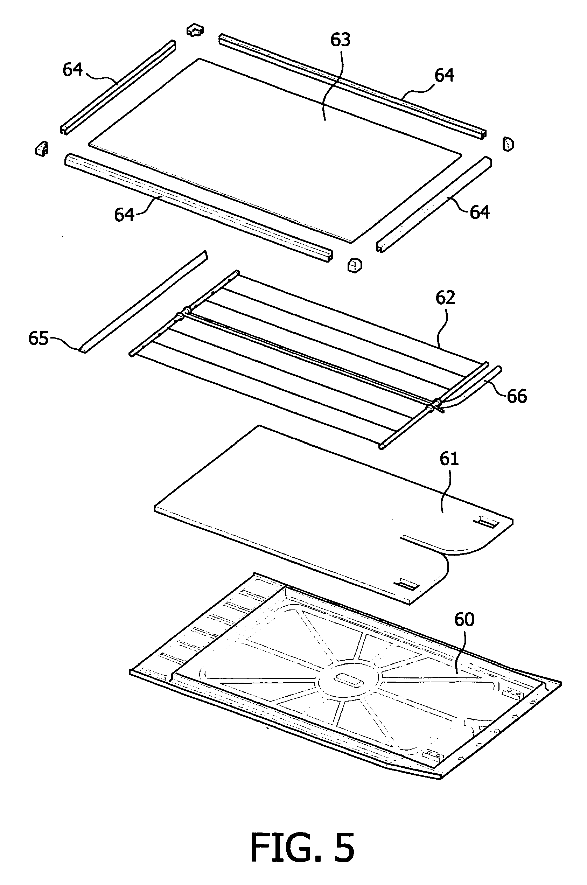

Finally, figure 5 shows a thermal solar collector 2 which can be applied very well in combination with the inventive liquid container. Solar collector 2 comprises a vacuum-formed plastic rear tray 60 which is further provided with a strip 65 of foam material, and an intermediate insulating plate 61 on which is arranged an absorbing unit 62. The whole is covered by means of a transparent cover plate 63 which is attached for this purpose to rear tray 60 using profiles 64. If desired, plate 63 can comprise a glass plate or be manufactured from a transparent plastic, such as for instance polycarbonate. Absorbing unit 62 comprises connections 66 for supply conduit 7 and discharge conduit 4.

## Claims

1. Liquid container (5) for heating tap water, which liquid container comprises at least a first container body (20) for containing a liquid that exerts a pressure on the walls thereof during use, and further comprises connecting means for external conduits in which the liquid can be circulated, as well as heat transfer means (9) for exchanging heat with the liquid present in the liquid container, the liquid container (5) comprising at least a second container body (21) which is manufactured from a thermally insulating foam material and which encloses the first container body (20) **characterized in that** an intermediate space (22) is left clear between the first and second container bodies in the unfilled state of the first container body, wherein the first container body (20) can be deformed during use such that at least a part of the first container body (20) comes to lie against the second container body (21), whereby a part of the pressure load is transmitted to the second container body (21) and absorbed thereby.

2. Liquid container as claimed in claim 1, **characterized in that** the foam material of the second container body (21) comprises an expanded polyolefin.

3. Liquid container as claimed in claim 1 or 2, **characterized in that** the foam material of the second container body (21) has a density of at least 20 g/dm³.

4. Liquid container as claimed in any of the foregoing claims, **characterized in that** the foam material of the second container body (21) has a density of at least 50 g/dm³.

5. Liquid container as claimed in any of the claims 1-4, **characterized in that** the creep load as according to ISO 7850 of the foam material of the second container body (21) amounts to at least 20 kPa for 5% deformation during 100 days.

6. Liquid container as claimed in any of the claims 1-4, **characterized in that** the creep load as according to ISO 7850 of the foam material of the second container body (21) amounts to at least 80 kPa for 5% deformation during 100 days.

7. Liquid container as claimed in any of the foregoing claims, **characterized in that** the first container body (20) comprises fixing means on the liquid side thereof for arranging components in the liquid container between opposite wall parts, wherein the first container body (20) can be deformed such that the components can be fixed by at least temporarily deforming the first container body.

8. Liquid container as claimed in any of the foregoing claims, **characterized in that** at least a part of the container bodies (20, 21) is not rotation-symmetrical.

9. Liquid container as claimed in any of the foregoing claims, **characterized in that** at least a part of the container bodies (20, 21) is manufactured from a plastic.

10. Liquid container as claimed in claim 9, **characterized in that** at least a part of the container bodies (20, 21) is made of a polyolefinic plastic, by means of rotation moulding.

11. Liquid container as claimed in any of the foregoing claims, **characterized in that** it is provided with a temperature sensor placed in the lower and/or upper half of the liquid container (5) for sensing the temperature of the tap water present in the liquid container (5), wherein the sensor is connected to regulating means for regulating the heat transfer means.

12. Liquid container as claimed in any of the foregoing claims, **characterized in that** the heat transfer means comprise a heat exchanger (9).

13. Liquid container as claimed in claim 12, **characterized in that** the heat exchanger (9) is a thin tube parallel heat exchanger.

14. Liquid container as claimed in any of the foregoing claims, **characterized in that** it is provided with a pump (8) for causing forced circulation of the liquid in the heat transfer means.

15. Liquid container as claimed in claim 14, **characterized in that** in normal operation the pump (8) has a maximum flow rate of 30 litres per hour.

16. Liquid container as claimed in claim 14 or 15, **characterized in that** the liquid container (5) is also provided with regulating means for switching the pump (8) on and off in order to respectively activate and stop the liquid supply.

17. Device for heating tap water, comprising a thermal solar collector (2) and at least one liquid container (5) as claimed in any of the claims 1-16, further comprising a supply conduit (7) placed between the liquid container and the thermal solar collector, a discharge conduit (4) placed between the thermal solar collector (2) and the liquid container (5) and, if desired, a pump (8) for causing forced circulation of the liquid in the device.

18. Device as claimed in claim 17, **characterized in that** it comprises at least two liquid containers (5) each liquid container being according to any of the claims 1-17 said containers being mutually connected in series and/or in parallel, wherein the throughfeed outlet channels of a previous liquid container are connected by means of a number of conduits to the throughfeed inlet channels of the subsequent liquid container.

19. Device for heating a liquid, comprising at least one liquid container (5) as claimed in any of the claims 1-16, whereby the heat transfer means comprise an electrical heating coil.

## Patentansprüche

1. Flüssigkeitsbehälter (5) zum Erwärmen von Leitungswasser, wobei der Flüssigkeitsbehälter mindestens einen ersten Behälterkörper (20) umfasst, um eine Flüssigkeit aufzunehmen, die während der Verwendung davon einen Druck auf dessen Wände ausübt, und ferner umfassend Verbindungsmittel für externe Leitungen, in denen die Flüssigkeit zirkuliert werden kann, sowie Wärmeübertragungsmittel (9) zum Austauschen von Wärme mit der Flüssigkeit, die in dem Flüssigkeitsbehälter vorhanden ist, wobei der Flüssigkeitsbehälter (5) mindestens einen zweiten Behälterkörper (21) umfasst, der aus einem wärmeisolierenden Schaumstoffmaterial hergestellt ist und den ersten Behälterkörper (20) umgibt, **dadurch gekennzeichnet, dass** ein Zwischenraum (22) zwischen dem ersten und dem zweiten Behälterkörper in nicht gefülltem Zustand des ersten Behälterkörper belassen wird, wobei der erste Behälterkörper (20) während der Verwendung verformt werden kann, sodass mindestens ein Teil des ersten Behälterkörpers (20) an den zweiten Behälterkörper (21) zum Anliegen kommt, wobei ein Teil der Druckbeanspruchung auf den zweiten Behälterkörper (21) übertragen und von diesem aufgenommen wird.

2. Flüssigkeitsbehälter nach Anspruch 1, **dadurch gekennzeichnet, dass** das Schaumstoffmaterial des zweiten Behälterkörpers (21) ein expandiertes Polyolefin umfasst.

3. Flüssigkeitsbehälter nach Anspruch 1 oder 2, **dadurch gekennzeichnet, dass** das Schaumstoffmaterial des zweiten Behälterkörpers (21) eine Dichte von mindestens 20 g/dm3 aufweist.

4. Flüssigkeitsbehälter nach einem der vorstehenden Ansprüche, **dadurch gekennzeichnet, dass** das Schaumstoffmaterial des zweiten Behälterkörpers (21) eine Dichte von mindestens 50 g/dm3 aufweist.

5. Flüssigkeitsbehälter nach einem der Ansprüche 1 bis 4, **dadurch gekennzeichnet, dass** die Kriechbeanspruchung gemäß ISO 7850 des Schaumstoffmaterials des zweiten Behälterkörpers (21) mindestens 20 kPa bei 5 % Verformung im Laufe von 100 Tagen beträgt.

6. Flüssigkeitsbehälter nach einem der Ansprüche 1 bis 4, **dadurch gekennzeichnet, dass** die Kriechbeanspruchung gemäß ISO 7850 des Schaumstoffmaterials des zweiten Behälterkörpers (21) mindestens 80 kPa bei 5 % Verformung im Laufe von 100 Tagen beträgt.

7. Flüssigkeitsbehälter nach einem der vorstehenden Ansprüche, **dadurch gekennzeichnet, dass** der erste Behälterkörper (20) Befestigungsmittel auf der Flüssigkeitsseite davon zum Anordnen von Komponenten in dem Flüssigkeitsbehälter zwischen gegenüberliegenden Wandteilen umfasst, wobei der erste Behälterkörper (20) verformt werden kann, sodass die Komponenten durch mindestens vorübergehendes Verformen des ersten Behälterkörpers befestigt werden können.

8. Flüssigkeitsbehälter nach einem der vorstehenden Ansprüche, **dadurch gekennzeichnet, dass** mindestens ein Teil der Behälterkörper (20, 21) nicht drehsymmetrisch ist.

9. Flüssigkeitsbehälter nach einem der vorstehenden Ansprüche, **dadurch gekennzeichnet, dass** mindestens ein Teil der Behälterkörper (20, 21) aus einem Kunststoff hergestellt ist.

10. Flüssigkeitsbehälter nach Anspruch 9, **dadurch gekennzeichnet, dass** mindestens ein Teil der Behälterkörper (20, 21) mittels eines Rotationsgießverfahren aus einem Polyolefin-Kunststoff gefertigt ist.

11. Flüssigkeitsbehälter nach einem der vorstehenden Ansprüche, **dadurch gekennzeichnet, dass** er mit einem Temperatursensor bereitgestellt ist, der in der unteren und/oder oberen Hälfte des Flüssigkeitsbehälters (5) angeordnet ist, um die Temperatur des Leitungswassers, das in dem Flüssigkeitsbehälter (5) vorhanden ist, zu erfassen, wobei der Sensor mit Regulierungsmitteln zum Regulieren der Wärmeübertragungsmittel verbunden ist.

12. Flüssigkeitsbehälter nach einem der vorstehenden Ansprüche, **dadurch gekennzeichnet, dass** die Wärmeübertragungsmittel einen Wärmeaustauscher (9) umfassen.

13. Flüssigkeitsbehälter nach Anspruch 12, **dadurch gekennzeichnet, dass** der Wärmeaustauscher (9) ein paralleler Dünnrohr-Wärmeaustauscher ist.

14. Flüssigkeitsbehälter nach einem der vorstehenden Ansprüche, **dadurch gekennzeichnet, dass** er mit einer Pumpe (8) bereitgestellt ist, um eine Zwangszirkulation der Flüssigkeit in den Wärmeübertragungsmitteln zu bewirken.

15. Flüssigkeitsbehälter nach Anspruch 14, **dadurch gekennzeichnet, dass** bei Normalbetrieb die Pumpe (8) einen maximalen Durchfluss von 30 Litern pro Stunde aufweist.

16. Flüssigkeitsbehälter nach einem der Ansprüche 14 oder 15, **dadurch gekennzeichnet, dass** der Flüssigkeitsbehälter (5) auch mit Regulierungsmitteln zum Ein- und Ausschalten der Pumpe (8) bereitgestellt ist, um die Flüssigkeitsversorgung zu aktivieren bzw. anzuhalten.

17. Vorrichtung zum Erwärmen von Leitungswasser, umfassend einen thermischen Solarkollektor (2) und mindestens einen Flüssigkeitsbehälter (5) nach einem der Ansprüche 1 bis 16, ferner umfassend eine Versorgungsleitung (7), die zwischen dem Flüssigkeitsbehälter und dem thermischen Solarkollektor angeordnet ist, eine Ablassleitung (4), die zwischen dem thermischen Sonnenkollektor (2) und dem Flüssigkeitsbehälter (5) angeordnet ist, und falls gewünscht, eine Pumpe (8) zum Bewirken der Zwangszirkulation der Flüssigkeit in der Vorrichtung.

18. Vorrichtung nach Anspruch 17, **dadurch gekennzeichnet, dass** diese mindestens zwei Flüssigkeitsbehälter (5) umfasst, wobei jeder Flüssigkeitsbehälter nach einem der Ansprüche 1 bis 17 ausgestaltet ist, wobei die Behälter in Reihe und/oder parallel miteinander verbunden sind, wobei Durchlaufauslasskanäle eines vorgeschalteten Flüssigkeitsbehälters mittels einer Reihe von Rohrleitungen mit den Durchflaufeinlasskanälen des nächsten Flüssigkeitsbehälters verbunden sind.

19. Vorrichtung zum Erwärmen einer Flüssigkeit, umfassend mindestens einen Flüssigkeitsbehälter (5) nach einem der Ansprüche 1 bis 16, wobei die Wärmeübertragungsmittel eine elektrische Heizspule umfassen.

## Revendications

1. Récipient pour liquide (5) permettant de chauffer de l'eau du robinet, lequel récipient pour liquide comprend au moins un premier corps de récipient (20) destiné à contenir un liquide qui exerce une pression sur les parois dudit corps au cours de l'utilisation, et comprend en outre des moyens de connexion pour des conduits externes dans lesquels le liquide peut circuler, ainsi que des moyens de transfert de chaleur (9) pour échanger de la chaleur avec le liquide présent dans le récipient pour liquide, le récipient pour liquide (5) comprenant au moins un deuxième corps de récipient (21) qui est fabriqué à partir d'un matériau en mousse thermiquement isolant et qui entoure le premier corps de récipient (20), **caractérisé en ce qu'**un espace intermédiaire (22) est maintenu dégagé entre les premier et deuxième corps de récipient dans l'état non rempli du premier corps de récipient, le premier corps de récipient (20) pouvant être déformé pendant l'utilisation de telle sorte qu'au moins une partie du premier corps de récipient (20) vienne se placer contre le deuxième corps de récipient (21), une partie de la contrainte de pression étant ainsi transmise au deuxième corps de récipient (21) et étant absorbée par celui-ci.

2. Récipient pour liquide selon la revendication 1, **caractérisé en ce que** le matériau en mousse du deuxième corps de récipient (21) comprend une polyoléfine expansée.

3. Récipient pour liquide selon la revendication 1 ou 2, **caractérisé en ce que** le matériau en mousse du deuxième corps de récipient (21) a une densité d'au moins 20 g/dm3.

4. Récipient pour liquide selon l'une quelconque des revendications précédentes, **caractérisé en ce que** le matériau en mousse du deuxième corps de récipient (21) a une densité d'au moins 50 g/dm3.

5. Récipient pour liquide selon l'une quelconque des revendications 1 à 4, **caractérisé en ce que** la contrainte de fluage selon ISO 7850 du matériau en mousse du deuxième corps de récipient (21) correspond à au moins 20 kPa pour une déformation de 5 % pendant 100 jours.

6. Récipient pour liquide selon l'une quelconque des revendications 1 à 4, **caractérisé en ce que** la contrainte de fluage selon ISO 7850 du matériau en mousse du deuxième corps de récipient (21) correspond à au moins 80 kPa pour une déformation de 5 % pendant 100 jours.

7. Récipient pour liquide selon l'une quelconque des revendications précédentes, **caractérisé en ce que** le premier corps de récipient (20) comprend des moyens de fixation sur le côté liquide de celui-ci, pour disposer des composants dans le récipient pour liquide entre des parties de paroi opposées, le premier corps de récipient (20) pouvant être déformé de telle sorte que les composants puissent être fixés en déformant au moins temporairement le premier corps de récipient.

8. Récipient pour liquide selon l'une quelconque des revendications précédentes, **caractérisé en ce qu'**au moins une partie des corps de récipient (20, 21) n'est pas symétrique en rotation.

9. Récipient pour liquide selon l'une quelconque des revendications précédentes, **caractérisé en ce qu'**au moins une partie des corps de récipient (20, 21) est fabriquée en plastique.

10. Récipient pour liquide selon la revendication 9, **caractérisé en ce qu'**au moins une partie des corps de récipient (20, 21) est fabriquée en plastique polyoléfinique, par rotomoulage.

11. Récipient pour liquide selon l'une quelconque des revendications précédentes, **caractérisé en ce qu'**il est pourvu d'un capteur de température placé dans la moitié inférieure et/ou supérieure du récipient pour liquide (5) pour détecter la température de l'eau du robinet présente dans le récipient pour liquide (5), le capteur étant connecté à des moyens de régulation pour réguler les moyens de transfert de chaleur.

12. Récipient pour liquide selon l'une quelconque des revendications précédentes, **caractérisé en ce que** les moyens de transfert de chaleur comprennent un échangeur de chaleur (9).

13. Récipient pour liquide selon la revendication 12, **caractérisé en ce que** l'échangeur de chaleur (9) est un échangeur de chaleur parallèle à tubes minces.

14. Récipient pour liquide selon l'une quelconque des revendications précédentes, **caractérisé en ce qu'**il est pourvu d'une pompe (8) pour provoquer une circulation forcée du liquide dans les moyens de transfert de chaleur.

15. Récipient pour liquide selon la revendication 14, **caractérisé en ce que** pendant le fonctionnement normal, la pompe (8) a un débit maximum de 30 litres par heure.

16. Récipient pour liquide selon la revendication 14 ou 15, **caractérisé en ce que** le récipient pour liquide (5) est également pourvu de moyens de régulation pour commuter la pompe (8) entre marche et arrêt afin d'activer et d'arrêter respectivement l'alimentation en liquide.

17. Dispositif pour chauffer de l'eau du robinet, comprenant un collecteur solaire thermique (2) et au moins un récipient pour liquide (5) selon l'une quelconque des revendications 1 à 16, comprenant en outre un conduit d'alimentation (7) placé entre le récipient pour liquide et le collecteur solaire thermique, un conduit de décharge (4) placé entre le collecteur solaire thermique (2) et le récipient pour liquide (5), et si on le souhaite, une pompe (8) pour provoquer la circulation forcée du liquide dans le dispositif.

18. Dispositif selon la revendication 17, **caractérisé en ce qu'**il comprend au moins deux récipients pour liquide (5), chaque récipient pour liquide étant tel que selon l'une quelconque des revendications 1 à 17, lesdits récipients étant connectés mutuellement en série et/ou en parallèle, les canaux de sortie de passage d'un récipient pour liquide précédent étant connectés au moyen d'un certain nombre de conduits aux canaux d'entrée de passage du récipient pour liquide suivant.

19. Dispositif pour chauffer un liquide, comprenant au moins un récipient pour liquide (5) selon l'une quelconque des revendications 1 à 16, dans lequel les moyens de transfert de chaleur comprennent un enroulement de chauffage électrique.
